# EUROPÄISCHE PATENTANMELDUNG

(11) **EP 1 083 526 A2**
(43) Veröffentlichungstag der Anmeldung: **14.03.2001**
(21) Anmeldenummer: 00126933.1
(22) Anmeldetag: 08.12.2000
(51) Int. Cl.: G07F 7/08, G07F 7/00, G07F 15/00

(54) **Schaltung für ein Betriebssystem für Energiezähler**

(30) Priorität: 09.12.1999 DE 19960115
(71) Anmelder: SAL Energiehandels GmbH & Co KG, 04207 Leipzig (DE); Böhme, Uwe, 04207 Leipzig (DE); Cisnik, Maik, 06679 Granschütz (DE); Schäfer, Anko, 06679 Granschütz (DE)
(72) Erfinder: Böhme, Uwe, 04207 Leipzig (DE); Cisnik, Maik, 06679 Granschütz (DE); Schäfer, Anko, 06679 Granschütz (DE)
(74) Vertreter: Amthor, Manfred W. J.

(57) **Zusammenfassung**

Durch die erfindungsgemäße Schaltung für ein Betriebssystem für datenträgergestützte Mess-, Zähl-, Anzeige-, Registrier-, Abgabe- und Abrechnungsapparate für elektrische oder andere Energie, sowie durch eine integrierte neue Vergleichs- und Auswahlelektronik für codierte Datenträger, werden bestimmte spezifische Daten mehrerer Datenträger permanent verglichen und autoselektiv nur jeweils ein auswählbarer Datenträger für das Betriebssystem temporär aktiviert.

Im dargestellten Anwendungsfall der Schaltung des Betriebssystems ist die Autoselektion der Datenträger nach ökonomischen Kriterien des Energieangebotes determiniert.

Gleichartig sind auch von der erfindungsgemäßen Schaltung der Vergleichs- und Auswahlelektronik leere Datenträger, z.B. nach Verbrauch einer codierten und limitierten Leistung oder Vorleistung, erkennbar und durch alternative und leistungsoffene Datenträger zur Vermeidung eines Abschalteffektes der Energiezufuhr autoselektiv ersetzbar angeordnet.

Die vorgeschlagene Schaltung des Betriebssystems entspricht damit allen technologischen, wirtschaftlichen und wettbewerbsseitigen Belangen der aktuellen Liberalisierung des Energiemarktes.

## Beschreibung

Die Erfindung betrifft die Schaltung eines Betriebssystems für datenträgergestützte, kombinierte Mess-, Zähl-, Anzeige-, Registrier-, Abgabe- und Abrechnungsapparate für elektrische Energie; oder auch Gas, Wasser, Fernwärme u.a. für beliebige Standorte und Verwendungszwecke.
Die Erfindung betrifft auch die Schaltung solcher Apparate, bei denen das komplexe System der kombinierten Messung, Zählung, Anzeige, Registrierung, Abgabe und Abrechnung in verschiedene, selbständig einsatzfähige Apparate oder Apparategruppen, aufgegliedert ist.

Bekannte "Systeme zum bargeldlosen Betrieb von Kassierzähler- Abgabegeräten" (DE-Gbm 297 04 120);
oder bekannte Apparate solcher Systeme wie "Bargeldloses Steuer- und Abrechnungsgerät mit integriertem beglaubigten Elektrizitätszähler zur Abgabe elektrischer Energie mittels frei programmierbarer Datenträger, wie Chipkarte oder Touch-Memory" (DE-Gbm 94 20 924 und DE-Gbm 295 04 347);
sowie eine bekannte "Vorrichtung zur gesteuerten bargeldlosen Abgabe von elektrischer Energie" (DE-Gbm 295 01 116.5);
weisen prinzipiell und übereinstimmend einen frei programmierbaren, oder auch durch bidirektionale Datenübertragung drahtlos aufbuchbaren, Datenträger des Energieanbieters und ein beglaubigtes und gegen unbefugten Eingriff gesichertes Energiezähl- und -abgabegerät auf, mit dem auch eine bargeldlose Abrechnung der verbrauchten Energie erfolgt.
Die Datenträger enthalten dabei Daten wie etwa die Kundennummer, Zählernummer, Guthaben, Kreditvolumen, Tagespreis in Abhängigkeit einer Zeit- und Kalenderfunktion, sowie einen Energieabschaltbefehl nach etwa vollzogener Ableistung, z.B. "Abstromung" des Guthabens oder Kreditvolumens, des durch Vorleistung erworbenen Datenträgers des Energiekunden eines speziellen Anbieters.

Alle diese bekannten Systeme des Standes der Technik haben dabei folgende gleichartige Nachteile gemeinsam:
a. - Der Käufer /Energiekunde/ des Datenträgers eines Energieanbieters kann einen Wechsel des Energieanbieters nur durch einen manuellen Austausch des Datenträgers herstellen, was bedeutet, dass er für die Zeit des Einsatzes eines Datenträgers ausschließlich an diesen Energieanbieter gebunden ist, während eine Inanspruchnahme eines alternativen Datenträgers /Energieanbieters/ gleichzeitig nicht möglich ist.
   Damit sind dem Energiekunden wesentliche Vorzüge der Liberalisierung des Energiemarktes, z.B. des Strommarktes, nur sehr erschwert zugängig.
b. - Der Käufer des Datenträgers /Energiekunde/ kann nach eingetretener Ableistung, z.B. "Abstromung" /Verbrauch des Guthabens und/oder Kredites eines Datenträgers/ keine Energie, z.B. Strom, beziehen; d.h., es kommt zur automatischen Abschaltung der Energiezufuhr, sofern nicht rechtzeitig vorher ein manueller Wechsel des Datenträgers vorgenommem wird.
   Eine solche Praxis ist für den Energiekunden jedoch nicht nur unangenehm und unpraktikabel.
   Zusätzlich verbleibt auch auf dem Datenträger ein mehr oder weniger großes ungenutztes Restvolumen von Energie, z.B. elektrischer Strom, so dass der effektive Energiepreis für den Energiekunden um diesen Betrag noch erhöht sein kann.
   Zur sicheren Vermeidung dieses Abschalteffektes ist der Energiekunde somit genötigt, auf die sofortige Gegenleistung einer längst investierten Vorleistung ersatzlos zu verzichten.
c.- Die zwingende Bindung des Energiekunden an jeweils nur einen Datenträger /Energieanbieter/ unterwirft ihn alternativlos dessen Preisregime; d.h., zeit- und kalenderabhängige Tagespreise und Preisverläufe sind völlig indisponibel und nicht auswählbar.
   Damit ist sowohl ein permanenter Vergleich zwischen mehreren Datenträgern /Energieanbietern/ untereinander, wie auch ein permanenter Vergleich der jeweiligen zeit- und kalenderabhängigen Preise und Preisverläufe mehrerer Datenträger /Energieanbieter/, ausgeschlossen.

Angesichts dieser Nachteile des Standes der Technik besteht die Aufgabe der Erfindung in der Schaffung einer neuen Schaltung für ein Betriebssystem für Energiezähler, das dem Energiekunden ein autoselektiv ermitteltes, günstigstes Momentanangebot mehrerer Energieanbieter zuschaltet und damit die vorbezeichneten Nachteile a bis c nicht mehr aufweist.

Erfindungsgemäß besteht die Lösung der Aufgabe für die neue Schaltung eines Betriebssystem für Energiezähler darin,
dass mehrere, einzeln angeordnete Datenträgerplätze für je einen auswechselbar aufnehmbaren, programmierbaren Datenträger;
sowie eine Vergleichs- und Auswahlelektronik für diese Datenträger, wodurch einzelne bestimmte und untereinander vergleichbare Daten der Datenträger permanent vergleichbar sind und jeweils nur ein aus dem Vergleich auswählbarer Datenträgerplatz autoselektiv für das Betriebssystem temporär aktivierbar ist, während die jeweils alternativen Datenträgerplätze für das Betriebssystem temporär inaktivierbar sind;
wirkverbunden angeordnet sind.

Erfindungsgemäß ist durch dieses neue Betriebssystem für eine integrierte neue Vergleichs- und Auswahlelektronik mit permanentem Zugriff auf gleichzeitig mehrere alternative Datenträgerplätze die bisherige Nötigung zur bedingungslosen Zeitbindung an einen de facto monopolen Energieanbieter beseitigt und durch eine dynamische Autoselektion eines momentan günstigsten Energieanbieters ersetzt.

Erfindungsgemäß ist gleichzeitig und gleichartig realisiert, dass ein programmierter Abschaltbefehl eines Datenträgers, etwa im Falle der restfreien Ableistung, z.B. "Abstromung" des Kartenguthabens, mittels der neuen Vergleichs- und Auswahlelektronik durch autoselektive Auswahl eines verfügbaren unlimitierten Energieanbieters, beispielsweise des Betreibers der Energieleitung, z.B. des elektrischen Stromnetzes, neutralisierbar ist.

In zweckmäßiger Anwendung der erfindungsgemäßen Schaltung des Betriebssystems, das prinzipiell nicht ausschließlich auf eine preisdeterminierte Selektion der Datenträger, wenngleich auch bevorzugt, gerichtet ist, sind auch andere Kriterien der Vergleichs- und Auswahlelektronik, wie etwa unter Umweltaspekten /alternative Energien/ codierte Datenträger, vom Betriebssystem gleichartig erfassbar.

In weiterer Ausgestaltung der Erfindung ist schließlich vorgeschlagen, dass
- sich nach jeweiliger Ableistung, z.B. Abstromung eines momentan günstigstens Energieanbieters, eine dementsprechend preisdeterminierte Rangfolge der verbliebenen Datenträger für die Aktivierung im Betriebssystem anschließt;
- ein manueller Wahlschalter des Betriebssystems sowohl eine subjektive Zu- und Abschaltung der Vergeichs- und Auswahlelektronik, wie eine subjektive Auswahl eines Datenträgers, prioritär jederzeit ermöglicht;
- die Daten der kumulativen Aktivzeit jedes Datenträgers im Display des Betriebssystems ablesbar und speicherbar sind; und, dass ein entsprechender Speicherplatz des Betriebssystems extern aus- und einlesbar ist.

Die erfindungsgemäße Schaltung für ein Betriebssystem für Energiezähler ist durch ein Blockschaltbild gemäß Zeichnung beispielhaft dargestellt und nachfolgend näher erläutert.

Der Energiezufluß erfolgt, wie an sich bekannt, zunächst zu einem beglaubigten und gegen unbefugten Zugriff oder Manipulation gesicherten Messwerk (3), das erfindungsgemäß über eine SO-Schnittstelle mit der Vergleichs- und Auswahlelektronik (1) verbunden ist. Die Vergleichs- und Auswahlelektronik (1) hat über einen Speicherplatz (5) und eine Schnittstelle (6) Zugang zu einer Anzahl von Datenträgerplätzen (N,X1,X2,X3), die für die Aufnahme codierter Datenträger der Energieanbieter und/oder des Netzbetreibers ausgerüstet sind. Diese Datenträger enthalten alle wesentlichen Parametrierdaten wie z.B. KWh-Preis für Hoch- und Niedertarif, Kreditrahmen, Freischaltung, Impulsanpassung an das jeweilige Messwerk /Kassierzählertyp/, Grundgebührhöhe und sonstige spezifische Daten der Energieanbieter und Energieabnehmer. Die Datenträger sind dabei z.B. als käufliche Chipkarten ausgebildet, wodurch sich der vorleistungspflichtige Energiekunde Zugang zum jeweiligen Energieanbieter verschafft.

Durch die Schaltung des neuen Betriebssystems ist der Energiekunde, im Gegensatz zu den bisher bekannten Betriebssystemen des Standes der Technik, nicht mehr an den fixierten Bezug durch eine Chipkarte gebunden, sondern verfügt über eine permanente Sofortanpassung an den jeweils maximierten Codex eines Energianbieters entsprechend der Autoselektion der Vergleichs- und Auswahlelektronik (1). Das geschieht im einzelnen dadurch, dass die Vergleichs- Auswahlelektronik (1) alle Datenträger der Datenrägerplätze (N,X1,X2,X3) ständig vergleicht und momentan nur jeweils einen ausgewählten Datenrägerplatz aktiviert, indem es diesen über das Messwerk (3) dem Betriebssystem zuführt.

Diese Autoselektion der Datenträger kann dabei sowohl nach rein ökonomischen Kriterien, wie auch zweckmäßigen anderen Kriterien, wie etwa ökologischen Merkmalen der Energiequelle u.a., erfolgen.
Schließlich kann die geschaltete Autoselektion der Datenträgerplätze auch nach dem Prinzip einer prioritären Versorgungskontinuität erfolgen, d.h., im Falle des restfreien Verbrauches des codierten Energievolumens eines oder mehrerer Datenträgerplätze (X1,X2,X3), wie etwa bei vollständiger Ableistung, z.B. Abstromung der Chipkarten, kann der unterbrechungsfreie Energiebezug eines unlimitierten und bezugsoffenen Datenträgerplatzes (N), hier z.B. der des Betreibers eines elektrischen Stromnetzes, einsetzen.
Das ist ein völlig gleichartiger Vorzug der neuen Autoselektion durch die Vergleichs- und Auswahlelektronik (1) in Verbindung mit der Schaltung mehrerer Datenträgerplätze (N,X1,X2,X3).
Insoweit,ist dem Datenträgerplatz (N) des Betreibers der Energieleitung, z.B. eines elektrischen Stromnetzes in der neuen Schaltung des Betriebssystems gegenüber den Datenträgern (X1,X2,X3) eine Sonderstellung zugewiesen.

Im Interesse einer weitergehenden Flexibilität der Schaltung ist ein manueller Wahlschalter (2) vorgesehen, mit dem jederzeit die Vergleichs- und Auswahlelektronik (1) zu- und abschaltbar ist, sowie jeder der Datenträgerplätze (N,X1,X2,X3) einem manuellen Zugriff unterliegt. Damit ist gewährleistet, dass auch gegen die getroffene Autoselektion der Vergleichs- und Auswahlelektronik (1) aktivierte Datenträgerplätze subjektiv erreichbar sind.

Die hohe Flexibilität einer permanenten Energieauswahl aus mehreren Energieanbietern wird noch durch eine zugeschaltete Zeit- und Kalenderfunktion (4) ergänzt, mit der die Datenverläufe der Datenträgerplätze (N,X1,X2,X3), insoweit sie zeit- und/oder kalenderabhängig sind, in die Autoselektion der Vergleichs- und Auswahlelektronik (1) einfließen.
Schließlich ist die erfindungsgemäße Schaltung durch ein Display (7) und einen Speicherplatz (5) komplettiert, womit eine visuelle Direktablesung des aktuellen Betriebsmodus und der aktuellen Betriebsdaten, sowie eine externe Ein- und Auslesung, etwa durch den Herausgeber der Datenträger oder des Betreibers einer Energieleitung, z.B. eines elektrischen Stromnetzes, möglich sind.

Es ergibt sich aus der erfindungsgemäßen Schaltung für ein Betriebssystem, dass eine Beschränkung auf eine bestimmte Art oder Anzahl angeordneter Datenträger nicht beabsichtigt ist und die vorgestellte Variante lediglich ein Ausführungsbeispiel der Erfindung darstellt.
Naheliegende Abwandlungen, Änderungen oder Ergänzungen, die das Wesen der Erfindung nicht verlassen, unterliegen natürlich ihrem Anspruch.

### Verzeichnis der Bezugszeichen

- 1: Vergleichs- und Auswahlelektronik
- 2: manueller Wahlschalter
- 3: Messwerk
- 4: Zeit- und Kalenderfunktion
- 5: Speicherplatz des Betriebssystems
- 6: Schnittstelle
- 7: Display des Betriebssystems
- N: Datenträgerplatz des Netzbetreibers
- X1: Datenplatz eines Energieanbieters
- X2: Datenplatz eines Energieanbieters
- X3: Datenplatz eines Energieanbieters

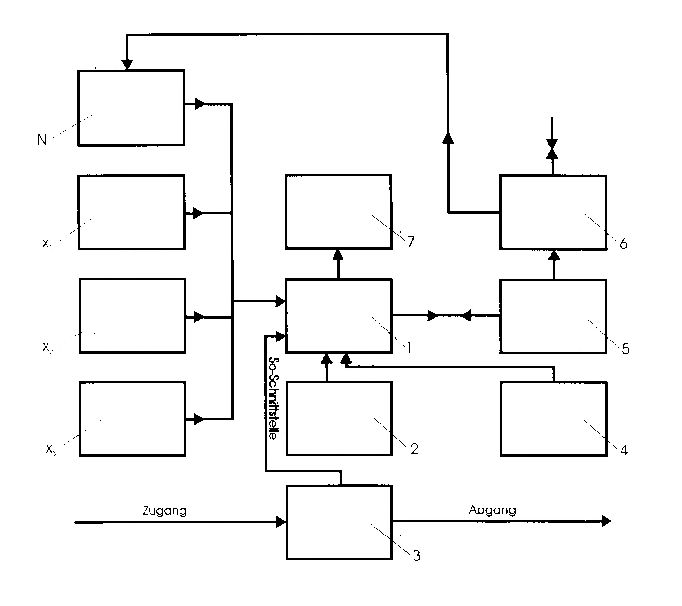

## Patentansprüche

1. Schaltung für ein Betriebssystem für datenträgergestützte, kombinierte Mess-, Zähl-, Anzeige-, Registrier-, Abgabe- und Abrechnungsapparate für elektrische Energie, Gas, Wasser oder Fernwärme, und für einzelne oder mehrere Sektionen solcher Apparate;
**gekennzeichnet durch**
mehrere, einzeln angeordnete Datenträgerplätze (N, X1, X2, X3) für je einen auswechselbar aufnehmbaren, programmierbaren Datenträger, sowie eine Vergleichs- und Auswahlelektronik (1) für diese Datenträger, wodurch einzelne bestimmte und untereinander vergleichbare Daten der Datenträger permanent vergleichbar sind und jeweils nur ein aus dem Vergleich auswählbarer Datenträgerplatz (N) oder (X1) oder (X2) oder (X3) autoselektiv für das Betriebssystem temporär aktivierbar ist, während die jeweils alternativen Datenträgerplätze für das Betriebssystem temporär inaktivierbar sind.

2. Schaltung für ein Betriebssystem nach Patentanspruch 1,
**dadurch gekennzeichnet,**
dass durch die Vergleichs- und Auswahlelektronik (1) in Abhängigkeit von der Zeit- und Kalenderfunktion (4) jeweils der Datenträgerplatz (N) oder (X1) oder (X2) oder (X3) des jeweils momentan niedrigsten Preises je 1 KWh für das Betriebssystem temporär aktivierbar ist.

3. Schaltung für ein Betriebssystem nach den Patentansprüchen 1 und 2,
**dadurch gekennzeichnet,**
dass durch die Vergleichs- und Auswahlelektronik (1) in Abhängigkeit von der Zeit- und Kalenderfunktion (4); und nach vollzogener Ableistung des Datenträgerplatzes des momentan niedrigsten Preises je Energieeinheit, eine preisdeterminierte Rangfolge der Datenträgerplätze (N), (X1), (X2) und (X3) für die Aktivierung im Betriebssystem fortsetzbar ist.

4. Schaltung für ein Betriebssystem nach den Patentansprüchen 1 bis 3,
**dadurch gekennzeichnet,**
dass durch die Vergleichs- und Auswahlelektronik (1) nach vollzogener Ableistung der Datenträgerplätze (X1), (X2) und (X3); frei von einer Zeit- und Kalenderfunktion (4) und frei von einer preisdeterminierten Rangfolge für die Aktivierung im Betriebssystem; der Datenträgerplatz (N) für das Betriebssystem auf Dauer aktivierbar ist.

5. Schaltung für ein Betriebssystem nach den Patentansprüchen 1 bis 4,
**dadurch gekennzeichnet,**
dass durch den manuellen Wahlschalter (2) die Vergleichs- und Auswahlelektronik (1) prioritär zu- und abschaltbar ist.

6. Schaltung für ein Betriebssystem nach den Patentansprüchen 1 bis 5,
**dadurch gekennzeichnet,**
dass durch den manuellen Wahlschalter (2) jeder der Datenplatzträgerplätze (N), (X1), (X2) und (X3), frei von einer Zeit- und Kalenderfunktion und frei von einer preisdeterminierten Rangfolge, selektiv zu- und abschaltbar ist.

7. Schaltung für ein Betriebssystem nach den Patentansprüchen 1 bis 6,
**dadurch gekennzeichnet,**
dass die Daten der kumulativen Aktivzeit jedes Datenträgerplatzes (N), (X1), (X2) und (X3) im Display des Betriebssystems (7) ablesbar sind.

8. Schaltung für ein Betriebssystem nach den Patentansprüchen 1 bis 7,
**dadurch gekennzeichnet,**
dass die Daten der kumulativen Aktivzeit jedes Datenträgerplatzes (N), (X1), (X2) und (X3) im Speicherplatz des Betriebssystems (7) speicherbar sind.

9. Schaltung für ein Betriebssystem nach den Patentansprüchen 1 bis 8,
**dadurch gekennzeichnet,**
dass der Speicherplatz des Betriebssystems (7) über die Schnittstelle (6) extern aus- und einlesbar ist.
